# EUROPÄISCHE PATENTSCHRIFT

(11) **EP 0 600 266 B1**
(45) Veröffentlichungstag und Bekanntmachung des Hinweises auf die Patenterteilung: **10.01.1996**
(21) Anmeldenummer: 93118071.5
(22) Anmeldetag: 06.11.1993
(51) Int. Cl.: C08G 77/38, C08G 77/12

(54) **Verfahren zur Herstellung von SiH-Gruppen aufweisenden Organopolysiloxanen**
Process for the preparation of SiH groups-containing organopolysiloxanes
Procédé de préparation d'organopolysiloxanes contenant des groupes SiH

(30) Priorität: 21.11.1992 DE 4239246
(43) Veröffentlichungstag der Anmeldung: 08.06.1994
(73) Patentinhaber: Th. Goldschmidt AG, D-45127 Essen (DE)
(72) Erfinder: Knott, Wilfried, Dr., D-45141 Essen (DE)

(56) Entgegenhaltungen:
- EP-A- 0 111 924
- EP-A- 0 219 082
- DE-C- 3 637 273

## Beschreibung

Die Erfindung betrifft ein Verfahren zur Herstellung von SiH-Gruppen aufweisenden Organopolysiloxanen aus den entsprechenden Si-Halogen-Gruppen enthaltenden Organopolysiloxanen durch Umsetzung mit Metallhydriden.

SiH-Gruppen enthaltende Organopolysiloxane sind vielfältig einsetzbare Ausgangsmaterialien in der Siliconechemie. Es ist deshalb von besonderem Interesse, diese Verbindungen aus leicht zugänglichen Ausgangsmaterialien wirtschaftlich, in möglichst einfacher Weise und mit hohen Ausbeuten herzustellen. Dabei kommen als Ausgangsmaterialien insbesondere die leicht zugänglichen entsprechenden Si-Halogen-Gruppen enthaltenden Organopolysiloxane in Betracht. Die Umwandlung von Chlorsiloxanen in die entsprechenden Wasserstoffsiloxane und analoge Reaktionen mit Chlorsilanen sind aus der Literatur bekannt.

So ist in der US-A-3 099 672 ein Verfahren beschrieben, Halogen- oder Alkoxysilane mit Natriumhydrid bei einer Temperatur von 175 bis 350°C umzusetzen. Bei diesem Verfahren, das nur für Silane und nicht für Organopolysiloxane anwendbar ist, tritt mit unterschiedlicher Ausbeute an die Stelle der Halogen- oder Alkoxygruppe ein Wasserstoffatom.

Entsprechend der US-A-3 099 672 wird dabei das Natriumhydrid als solches, als Suspension in Mineralöl oder anderen hochsiedenden inerten Kohlenwasserstoffen oder in Form eines Überzuges auf Natriumchloridteilchen verwendet. Die Notwendigkeit der Anwendung relativ hoher Temperaturen verteuert das Verfahren und führt häufig zu unerwünschten Nebenprodukten.

In der US-A-3 535 092 ist ein Verfahren zur Umsetzung von Verbindungen, welche Si-Halogen-Gruppen aufweisen, mit Natriumhydrid beschrieben, welches bereits bei Raumtemperatur oder nur mäßig erhöhter Temperatur abläuft. Dies wird durch die Verwendung von speziellen Lösungsmitteln, wie Hexaalkylphosphoramiden, Octaalkylpyrophosphoramiden und Tetraalkylharnstoff ermöglicht. Die Alkylreste in dem Lösungsmittel enthalten 1 bis 4 Kohlenstoffatome. Der US-A-3 535 092 ist dabei zu entnehmen, daß diese Lösungsmittel katalytisch wirken sollen. Das Verfahren ist sowohl auf Halogensilane wie Halogensiloxane anwendbar. Alkoxysilane reagieren unter gleichen Bedingungen nicht. Da die Lösungsmittel hohe Siedepunkte aufweisen, werden die SiH-Gruppen aufweisenden Verfahrensprodukte aus dem Reaktionsgemisch abdestilliert. Hierdurch wird die Anwendbarkeit dieses Verfahrens auf solche SiH-Gruppen-haltigen Silane oder Siloxane beschränkt, die unter technisch vertretbarem Aufwand und ohne thermische Zersetzung abdestilliert werden können. Eine Entfernung der vorgenannten Lösungsmittel durch Auswaschen ist nicht ohne weiteres möglich. Beim Abtrennen der Lösungsmittel mit Wasser entsteht mit überschüssigem Natriumhydrid Natriumhydroxid, welches in dem wäßrigen Medium zur Bildung von SiOSi-Bindungen unter Abspaltung von Wasserstoff führt. Da die in dieser Patentschrift genannten Lösungsmittel aber physiologisch bedenklich sind, ist für die meisten Anwendungszwecke eine völlige Trennung der Si-haltigen Verfahrensprodukte von den Lösungsmitteln notwendige Voraussetzung.

Man hat zum Austausch von Si-Halogen-Gruppen durch SiH-Gruppen anstelle des Natriumhydrids auch bereits komplexe Hydride, wie z.B. Natriumaluminiumhydrid, verwendet. So ist in der DE-B-10 85 875 ein Verfahren zur Herstellung von Polysiloxanhydriden der allgemeinen Formel 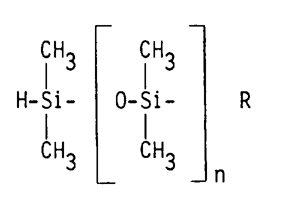 worin n eine ganze Zahl, insbesondere von 1 bis 5 ist und R Wasserstoff oder Alkyl- bzw. Arylreste bedeutet, beschrieben, welches dadurch gekennzeichnet ist, daß Polysiloxane der allgemeinen Formel 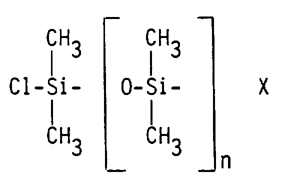 in der X Chlor oder Alkyl- bzw. Arylreste darstellt und n die obige Bedeutung hat, mit Lithiumaluminiumhydrid umgesetzt werden. Entsprechend den Beispielen der DE-B-10 85 875 wird 1,7-Dichloroctamethyltetrasiloxan mit Lithiumaluminiumhydrid in Tetrahydrofuran in 74 %iger Ausbeute in 1,7-Dihydrooctamethyltetrasiloxan überführt. Die Umwandlung von 1-Chlorpentamethyldisiloxan in 1-Hydropentamethyldisiloxan soll mit Lithiumaluminiumhydrid in 57 %iger Ausbeute erfolgen.

Wie aus "Polish Journal of Chemistry" 53 (1979) 1383 bis 1386 hervorgeht, hat eine Nacharbeitung des Verfahrens der DE-B-10 85 875 ergeben, daß konkurrierend zu dem Austausch der Si-Halogen-Gruppen SiOSi-Bindungen gespalten werden, so daß als Nebenprodukte in erheblichem Umfang Silane, wie z.B. das gasförmige und leicht entzündliche Dimethylsilan, gebildet werden. Dies steht in Übereinstimmung zu den Angaben in "Chemie und Technologie der Silicone" von W. Noll, Verlag Chemie, 1968, Seite 206. Dort ist ausgeführt, daß bei der Einwirkung von Lithiumaluminiumhydrid in Ether auf lineare Polydimethylsiloxane unter Abspaltung von Silanen Siloxanbindungen in Alumosiloxanbindungen überführt werden. Diese Spaltungsreaktion verläuft bei Kieselsäureestern praktisch quantitativ. Diese Spaltung von SiOSi-Bindungen durch Einwirkung von Lithiumaluminiumhydrid ist auch der Zeitschrift für Naturforschung, 10b, (1955) 423 bis 424 zu entnehmen.

In der DE-B-15 68 255 ist ein ähnliches Verfahren beschrieben, bei dem als komplexes Aluminiumhydrid Trinatriumaluminiumhexahydrid verwendet wird. Auch bei Verwendung dieses komplexen Hydrides ist die Spaltung von SiOSi-Gruppen eine konkurrierende Reaktion.

Die DE-B-10 28 575 geht davon aus, daß die Hydrierung mit LiH sehr viel langsamer als die mit LiAlH₄ verläuft. Man müsse mit einem vielfachen Überschuß von LiH arbeiten, um zu tragbaren Ausbeuten zu kommen. Beim Arbeiten mit LiAlH₄ benötige man große Mengen von Lösungsmitteln (auf 1 kg SiH₄ 72,5 kg Ether). Sie lehrt statt dessen die Umsetzung mit Wasserstoff in Gegenwart von Natrium bzw. mit NaH unter Druck und bei erhöhter Temperatur. Wie die Beispiele zeigen, liegen die Ausbeuten bei 80 bis 90 %. Bei Verwendung von Natrium, insbesondere bei den angegebenen hohen Temperaturen, tritt aber als Nebenreaktion die Wurtzsche Reaktion auf (-Si-Cl + 2 Na + Cl-Si- → -Si-Si-), die zu vermeiden ist.

Aus der DE-C-36 37 273 ist ein Verfahren zur Herstellung von SiH-Gruppen enthaltenden Organopolysiloxanen bekannt, bei dem Halogensiloxane mit LiH, NaH, KH, CaH₂ oder MgH₂ unter Verwendung von Ethern als Reaktionsmedium unter kontinuierlicher Entfernung des sich auf der Oberfläche der Metallhydridteilchen während der Umsetzung abscheidenden Metallhalogenids unter Bildung frischer Oberfläche durch Einwirkung mechanischer Energie oder Ultraschall umgesetzt werden. Unter dem Gesichtspunkt der Preiswürdigkeit, der Sicherheit und dem Reduktionsvermögen kommt insbesondere MgH₂ in Betracht, da die Alkalihydride teuer und nicht ungefährlich zu handhaben sind, während die Reduktionskraft von CaH₂ zu gering ist. Bei der Umsetzung mit dem an sich vorzuziehenden MgH₂ entstehen jedoch in einer Nebenreaktion Anteile leicht entzündlichen Dimethylsilans, die zum einen die SiH-Ausbeute des Prozesses mindern, zum andern aber indirekt zu einer Änderung der ursprünglichen Kettenverteilung führen, und zwar insbesondere dann, wenn die Äquilibrierung des Chlorsiloxans mit FeCl₃ durchgeführt worden war.

Die EP-A-0 476 597 lehrt die Herstellung von 1,1,3,3-Tetramethyl-1,3-disiloxan durch Reduktion von 1,1,3,3-Tetramethyl-1,3-dichloro-1,3-disiloxan mit einem Metallhydrid, wie LiAlH₄, NaAlH₄, LiBH₄, LiH oder NaH in einem organischen Lösungsmittel unter Inertgas bei Temperaturen von 0 bis 50°C. Die nichtkomplexen Hydride LiH oder NaH führen aber ohne Aufmahlung nicht zu akzeptablen Umsätzen, während die komplexen Hydride LiAlH₄, NaAlH₄ und LiBH₄ sehr teuer und im Falle des LiAlH₄ und NaAlH₄ in ihrer Handhabung gefährlich sind.

Die Erfindung befaßt sich deshalb mit dem technischen Problem, Chlorpolysiloxane in Wasserstoffsiloxane umzuwandeln, wobei das geforderte Verfahren wirtschaftlich durchführbar sein muß und bei niedrigen Temperaturen ablaufen soll. Das verwendete Reaktionsmedium soll physiologisch möglichst unbedenklich sein. Das Reduktionsmittel soll nichtpyrophor, hochwirksam und selektiv sein und SiOSi-Bindungen nicht oder in nicht nennenswertem Maße spalten. Das Verfahren soll auf Organopolysiloxane mit Si-Halogen-Gruppen anwendbar sein, die ein beliebiges Molekulargewicht aufweisen und insbesondere hochmolekular sein können. Vorzugsweise soll das Verfahren mit α,ω-Halogen-Organopolysiloxanen durchführbar sein, und zwar insbesondere mit solchen Organopolysiloxanen, die aufgrund ihres hohen Molekulargewichtes nicht destillierbar sind und in dieser Form bei bekannten technischen Verfahren anfallen.

Diese Forderungen werden durch das erfindungsgemäße Verfahren erfüllt, dessen Kennzeichen darin besteht, daß man als Metallhydrid eine Verbindung der allgemeinen Formel 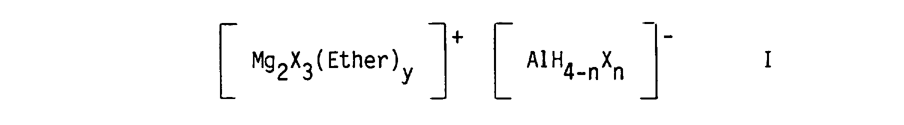 wobei
- X: Chlor, Brom oder Jod ist,
- y: eine Zahl von 0 bis 6 und
- n: eine Zahl von 1 bis 3 ist,
- Ether: ein aliphatischer oder cycloaliphatischer Ether mit 2 bis 30 Kohlenstoffatomen, ausgenommen tert.-Butylether, mit einem Dipolmoment > 0,5 Debye und einem Schmelzpunkt < 0°C ist,
verwendet und die Reaktion in diesem Ether als Lösungsmittel innerhalb eines Temperaturbereiches von 0 bis 20°C durchführt.

Ein bevorzugtes erfindungsgemäßes Verfahren ist dadurch gekennzeichnet, daß man als Ether Tetrahydrofuran, Diethylether, Dimethoxyethan (Glyme), Di-n-butylether oder 1,3-Dioxolan verwendet.

Die Umwandlung der Si-Halogen-Gruppen in SiH-Gruppen verläuft bei dem erfindungsgemäßen Verfahren mit einer Ausbeute von 80 bis 90 %, bezogen auf den in den Hydriden der Formel I zur Verfügung stehenden Wasserstoff. Dabei hat n vorzugsweise einen Wert von 1.

Das erfindungsgemäße Verfahren weist eine hohe Selektivität auf. Während die Umwandlung der SiCl-Gruppen in SiH nahezu quantitativ erfolgt, werden im Molekül gegebenenfalls vorhandene Alkenylgruppen, wie z.B. Vinylgruppen, nicht hydriert, sondern bleiben erhalten. So gelingt es beispielsweise, 1,3-Divinyl-1,3-dimethyl-1,3-dichlor-disiloxan in das entsprechende 1,3-Divinyl-1,3-dimethyl-1,3-dihydrogen-disiloxan zu überführen.

Die Herstellung der beim erfindungsgemäßen Verfahren eingesetzten Metallhydride der allgemeinen Formel I geschieht entsprechend einem Verfahren, welches in der DE-A-42 35 334 (Patentanmeldung P 42 35 334.5) beschrieben ist. Man setzt dabei Aluminiumhalogenid AlX₃ mit Magnesiumhydrid MgH₂ unter ständiger Aufmahlung in einem organischen Lösungsmittel um. Vorzugsweise verwendet man bei der Umsetzung MgH₂, welches aus den Elementen hergestellt ist, wobei man dem zu hydrierenden Magnesium als Katalysator von Beginn der Reaktion an Magnesiumhydrid einer Teilchengröße von ≤ 400 µm in einer Menge von mindestens 1,2 Gew.-%, bezogen auf zu hydrierendes Magnesium, zusetzt, und die Hydrierung bei einer Temperatur von ≥ 250°C und einem Druck von 0,5 bis 5 MPa unter ständigem Rühren des Reaktionsgutes durchführt. Dieses autokatalytische Verfahren zur Herstellung des hochwirksamen MgH₂ ist Gegenstand der DE-A-40 39 278.

Das erfindungsgemäße Verfahren wird durch die folgenden Beispiele noch näher erläutert.

### Beispiel 1

91,2 g (61,6 mMol H⁻) einer THF-Lösung von Chlor-Magnesium-Aluminiumhydridochlorid (n = 1) werden in einem Rundkolben unter Eiskühlung vorgelegt. 20,0 g (30,1 mMol) eines FeCl₃-äquilibrierten α,ω-Dichlorpolydimethylsiloxans werden unter Rühren so langsam zugetropft, daß die Reaktionstemperatur nicht über 10°C ansteigt. Nach beendeter Zugabe läßt man 2 Stunden bei Raumtemperatur nachrühren und gießt die Reaktionsmischung zügig in HCl/Eiswasser, wobei sich nach beendeter Hydrolyse die siloxanhaltige Phase von der Wasserphase abtrennt. Durch wiederholte Extraktion mit kleinen Portionen Wasser wird die Siloxanphase THF-frei gewaschen, über Na₂SO₄ getrocknet und filtriert. Die Auswaage beträgt 14,6 g (83 % der Theorie).

Das Reaktionsprodukt hat einen Wasserstoffgehalt von 0,27 % (79 % der Theorie). Die Daten der ¹H-NMR-Analytik sind:

| δ (ppm) | Messung in CDCl₃ |
|---|---|
| 0,05 | Singulett, 43,2 H |
| 0,20 | Dublett, 12 H |
| 4,70 | Heptett, 2 H |

Ergänzend belegt die Gaschromatographie den weitestgehenden Erhalt der ursprünglichen Kettenverteilung des α,ω-Dichlorpolydimethylsiloxans.

### Beispiel 2

5,44 g (15,5 mMol) kettenreinen α,ω-Dichlorpolydimethylsiloxans (Anzahl der Dimethylsilyloxygruppen = 4) werden entsprechend Beispiel 1 mit 84,4 g (51,2 mMol H⁻) THF-gelösten Chlor-Magnesium-Aluminiumhydridochlorids (n = 1) umgesetzt und danach hydrolytisch aufgearbeitet. Die rohe Siloxanphase wird zweimal mit wenig Wasser extrahiert und nach Phasentrennung über Na₂SO₄ getrocknet.

Der Wasserstoffwert beträgt 0,64 % (89 % der Theorie). Zur Charakterisierung des Reaktionsproduktes dient die ⁹Si-NMR-Analytik (Messung in CDCl₃):

| δ (ppm) | rel. Integral | Zuordnung |
|---|---|---|
| -7 | 1,75 | -(CH₃)₂SiH |
| -13 | 0,25 | -(CH₃)₂SiOC₄H₉ |
| -19 -22 | 2,00 | -(CH₃)₂SiO- |

Gemäß den Ergebnissen der ⁹Si-NHR-Analytik sind somit 88 % der SiCl-Gruppen in SiH-Gruppen überführt worden.

### Beispiel 3

20,0 g (88,1 mMol) 1,3-Divinyl-1,3-dimethyl-1,3-dichlor-disiloxan werden bei Raumtemperatur unter Rühren zu 215,5 g (219,8 mMol H⁻) THF-gelöstem Chlor-Magnesium-Aluminiumhydridochlorid hinzugetropft, wobei es zu einer Salzfällung kommt. Nach beendeter Zugabe wird die Reaktionsmischung 3 Stunden bei 50°C nachgerührt. Nach Erkalten wird der Ansatz zügig in eine eisgekühlte Ammoniumchloridlösung gegossen.

Phasentrennung und wiederholte Extraktion mit kleinen Portionen Wasser liefern ein Rohprodukt, das über Na₂SO₄ getrocknet und dann filtriert wird. Die Auswaage beträgt 11,1 g (80 % der Theorie).

Das Produkt besitzt einen Wasserstoffgehalt von 1,07 %; d.h. 84 % der Theorie. Die Daten der ¹H-NMR-Analytik sind:

| δ (ppm) | Messung in CDCl₃ |
|---|---|
| 0,25 | Multiplett, 6 H |
| 4,75 | Multiplett, 1,6 H |
| 6,05 | Multiplett, 5,6 H |

Ergänzend zeigt die ⁹Si-NMR-Spektroskopie ein Signal bei δ -13,8 ppm für 1,3-Divinyl-1,3-dimethyl-1,3-dihydrogen-disiloxan. Aus den spektroskopischen Analysen geht zweifelsfrei der Erhalt der Vinylfunktionen bei gleichzeitiger Umwandlung von SiCl- in SiH-Gruppen hervor.

## Patentansprüche

1. Verfahren zur Herstellung von SiH-Gruppen aufweisenden Organopolysiloxanen aus den entsprechenden Si-Halogen-Gruppen enthaltenden Organopolysiloxanen durch Umsetzung mit Metallhydriden, dadurch gekennzeichnet, daß man als Metallhydrid eine Verbindung der allgemeinen Formel 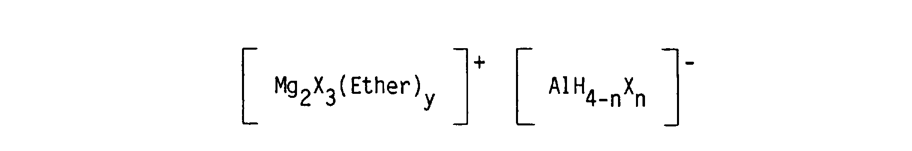 wobei
X Chlor, Brom oder Jod ist,
y eine Zahl von 0 bis 6 und
n eine Zahl von 1 bis 3 ist,
Ether ein aliphatischer oder cycloaliphatischer Ether mit 2 bis 30 Kohlenstoffatomen, ausgenommen tert.-Butylether, mit einem Dipolmoment > 0,5 Debye und einem Schmelzpunkt < 0°C ist,
verwendet und die Reaktion in diesem Ether als Lösungsmittel innerhalb eines Temperaturbereiches von 0 bis 20°C durchführt.

2. Verfahren nach Anspruch 1, dadurch gekennzeichnet, daß man als Ether Tetrahydrofuran, Diethylether, Dimethoxyethan (Glyme), Di-n-butylether oder 1,3-Dioxolan verwendet.

## Claims

1. Process for preparation of organopolysiloxanes containing SiH groups from the corresponding organopolysiloxanes containing Si halogen groups by reaction with metal hydrides, characterized in that the metal hydride used is a compound of the general formula
[Mg₂X₃(ether)_{y}] ⁺ [AlH₄₋ₙXₙ]⁻
where
X is chlorine, bromine or iodine,
y is a number from 0 to 6, and
n is a number from 1 to 3,
ether is an aliphatic or cycloaliphatic ether having 2 to 30 carbon atoms, with the exception of tert-butyl ether, having a dipole moment of > 0.5 debye and a melting point of < 0°C,
and the reaction is carried out in this ether as solvent within a temperature range of from 0 to 20°C.

2. Process according to Claim 1, characterized in that the ether used is tetrahydrofuran, diethyl ether, dimethoxyethane (glyme), di-n-butyl ether or 1,3-dioxolane.

## Revendications

1. Procédé de préparation d'organopolysiloxanes contenant des groupes SiH, à partir des organopolysiloxanes correspondants contenant des groupes de Si-halogène, par réaction avec des hydrures métalliques, caractérisé en ce qu'on utilise, comme hydrure métallique, un composé répondant à la formule générale 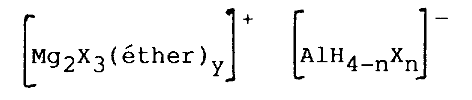 où
X est le chlore, le brome ou l'iode,
y est un nombre de 0 à 6,
n est un nombre de 1 à 3,
éther est un éther aliphatique ou cycloaliphatique ayant de 2 à 30 atomes de carbone, à l'exception de l'éther tert-butylique, ayant un moment dipolaire > 0,5 Debye et un point de fusion < 0°C,
et on effectue la réaction dans cet éther, comme solvant, dans une plage de température de 0 à 20°C.

2. Procédé selon la revendication 1, caractérisé en ce qu'on utilise, comme éther, le tétrahydrofuranne, l'éther diéthylique, le diméthoxyéthane (glyme), l'éther di-n-butylique ou le 1,3-dioxolanne.
